# EUROPEAN PATENT APPLICATION

(11) **EP 1 939 545 A2**
(43) Date of publication of application: **02.07.2008**
(21) Application number: 07023921.5
(22) Date of filing: 11.12.2007
(51) Int. Cl.: F24H 1/43, F24H 8/00

(54) **Heat exchanger having a coil with a variable diameter**

(30) Priority: 22.12.2006 IT AN20060076
(71) Applicant: MERLONI TERMOSANITARI S.p.A., 60044 Fabriano (Ancona) (IT)
(72) Inventor: De Sanctis, Guido, 60044 Fabriano (AN) (IT)
(74) Representative: Gentili, Enrico

(57) **Abstract**

The present invention relates to a heat exchanger (1) for high performance and in particular for condensation heat generators, comprising a tube (101) finned with fins (103), wound in a spiral to form an appropriate number of coils (102) and defining a combustion chamber (2) into which combustion fumes are introduced, said exchanger (1) being surrounded from a cylindrical shell (3) and divided to form a sensitive exchanger (SS) and a condenser exchanger (SC).

Said condenser exchanger (SC) has coils (102.C) positioned externally at a tangent to said cylindrical shell (3) and internally at a tangent to the surface of a refractory partitioning baffle (104) and/or wall (105), while said sensitive exchanger (SS) has coils (102.S) having a diameter that is reduced in relation to the diameter of the coils (102.C) of the condenser exchanger (SC) in such a manner that a gap (4) is formed between the external surface of said coils (102.5) and the internal surface of said shell (3) of sufficient size for the collection and circulation of the fumes.

Said cylindrical shell (3) therefore, has a constant diameter in spite of the presence of the gap (4) obtained by sacrificing the lesser diameter of the coils (102.S) in relation to that of the coils (102.C).

## Description

The present invention relates to a heat exchanger of simple construction, but able to guarantee high heat exchange efficiency, for high performance heat generators, in particular condensation generators. Said high performance heat generators have a variable efficiency between 93% and 98% (with reference to Inferior Calorific Power).

In conventional heat generators, the heat produced by the combustion is transferred by means of a heat exchanger to the heating system. After crossing the exchanger, the fumes produced by combustion are expelled into the atmosphere through a flue, at temperatures over 120°C. On the other hand, in high performance apparatus, the exhaust fumes are sent through specific heat exchangers which cool them to relatively low temperatures; therefore in condensation heat generators, said temperatures are approximately between 55-65°C and in any case, sufficient to provoke fume condensation.

One type of high performance or condensation type heat generator foresees the presence of two separate exchangers; the first heat exchanger is conceived to perform the exchange with the hot fumes on exit from the burner of the heat generator and has an exchange surface which is approximately the same size as the exchanger on a conventional heat generator. On the other hand, the second exchanger is destined to continue the heat exchange using the same fumes that have already been partially cooled.

Alternatively, said high performance or condensation heat generators may also be conceived having a single heat exchanger.

One type of heat exchanger currently used is substantially helicoidal, in other words, composed of a coil wound in a spiral around a central axis, with a number of coils arranged around the burner of the heat generator in such a manner that they are lapped and crossed efficiently by the fumes and heated directly by means of radiation and convection by the fume flow on exit from the burner in question.

On more common versions, these helicoidal exchangers are substantially counter-current exchangers, where the water enters from below and rises in an upward direction and is heated as it rises, and in an opposite manner, the exhaust fumes descend along the exchanger and are cooled until they release condensation.

These exchangers can be considered as being composed of two exchange portions.

In the first exchange portion, hereafter referred to as sensitive exchanger SS, a first cooling action is performed on the fumes emitted from the burner by a thermovector fluid circulating through the coil, and represented by the return water flow of a heating system. In this zone the fumes have a considerable specific volume and their temperature, during the heat exchange, will always remain above the "dew point temperature", and therefore from these, only the sensitive heat is recovered. In said sensitive exchanger SS the discharge flow occurs in a radial direction, i.e. orthogonal in relation to the central axis of the exchanger; therefore, each fume thread performs an exchange individually with a single coil among those present. The fume-water return flow exchange surface is substantially the same size as that of exchangers on conventional heat generators.

The fumes partially cooled by the heat exchange with the water return flow of the coil in exit from the sensitive exchanger SS, are collected in a plenum, located downstream thereof, and guided towards the second cooler portion of the exchanger.

Said portion, hereafter referred to as cold exchanger SC, continues to cool the discharged fumes of the sensitive exchanger SS. In said cold exchanger SC the fumes, which are colder and with a lower specific volume, are sent in a direction that is substantially parallel to the central axis of the exchanger in question in such a manner that said fumes perform an exchange in sequence with all of the coils of said cold exchanger SC. The further cooling action of said fumes is guaranteed by an exchanger surface of an appropriate size with respect to a reduced thermal jump ΔT between the water and the fumes.

In patent n° WO 98/20287, the aforesaid plenum is realised, in correspondence to the coils of the sensitive exchanger, by widening the diameter of the external shell, substantially cylindrical, conceived to contain the exchanger and the means of combustion. The solution proposed by the aforesaid patent for the realisation of said plenum results as being rather complicated from a constructive viewpoint, due to the fact that the external shell must be constructed with a variable diameter, for example, by welding together two cylinder sections having different diameters. The mechanical machining such as the continuous forming of plate coils and/or roll forming of plates would therefore result as inapplicable in order to realise in a single piece, said external shell having a variable diameter.

Combined systems for heat and electrical generation are known in prior art, associating a conventional heat generator, preferably of the condensation type, with a thermoelectric generator, such as a Stirling motor or having a fuel cell.

The patent WO 01/90656 describes a heat generator associated with a thermoelectric generator, composed therefore, of a flat exchanger, of a first burner to heat said exchanger, of an oxidising agent and fuel supply means, of said external generator for the generation of electrical power, of a second burner of said external generator and of an exhaust pipe for the gas flow produced by the second burner in the space wherein the first burner is located. In the case in point, the total length of the exchanger is struck by the fumes generated by both the first and the second burners which are mixed together from the beginning of the heat exchange action.

However, there are many reasons which demonstrate that it is advantageous for the fumes from the thermoelectric generator to strike the exchanger further downstream in relation to those produced by the heat generator; in particular the fumes from the thermoelectric generator are generally generated at a lower temperature than those produced by the heat generator and therefore it is more advantageous to mix the fumes only after the latter have been cooled down to the temperature of the former.

One solution proposed in this context is illustrated for example, in the description of the heat generator of patent GB 2 375 590, to be read in reference to the advantages to be gained by this technical solution.

Naturally the introduction of the fumes from the thermoelectric generator in an intermediate zone among several exchangers in sequence, or of a single exchanger, creates constructive complications.

In order to eliminate the aforesaid limits, at least partially, a first object of the present invention is to propose means able to realise in a heat generator an external shell having a constant diameter, substantially cylindrical, and conceived to contain a helicoidal exchanger and a means of combustion.

Further object of the present invention is to realise a means of heat exchange for a heat generator associated with a thermoelectric generator.

Further object of the present invention is to identify for a heat generator associated with a thermoelectric generator, a means of heat exchange wherein the mixing of the fumes produced by said first and said second burners occur in a zone wherein said fumes have independently reached substantially the same temperature.

Further object of the present invention is to identify a heat exchanger wherein the architecture remains substantially unchanged whether it must absorb heat exclusively from a heat generator, or from a heat generator associated with a thermoelectric generator.

Said objects and further advantages are achieved with an exchanger illustrated in the following description, in certain preferred embodiments, aided by the enclosed drawings and the appended claims, which compose an integral part of the same description.

In particular, the present invention will be described in a non-limiting manner, according to several preferred embodiments relative to a condensation type heat generator.

Figure 1 shows a vertical section of the essential parts of a condensation type heat generator equipped with a first variant of the heat exchanger according to the invention.

Figure 2 is identical to figure 1 except for the presence of a radial flame burner in place of a head burner.

Figure 3 shows a vertical section of the essential parts of a condensation type heat generator equipped with a second variant of the heat exchanger according to the invention able to receive the fumes from an external thermoelectric generator.

Figure 4 is identical to figure 3 except for the presence of a radial flame burner in place of a head burner.

Figure 5 shows a means for the deviation and guiding of discharged fumes.

Figure 6 shows a vertical section of a variant of the heat generator in fig. 3.

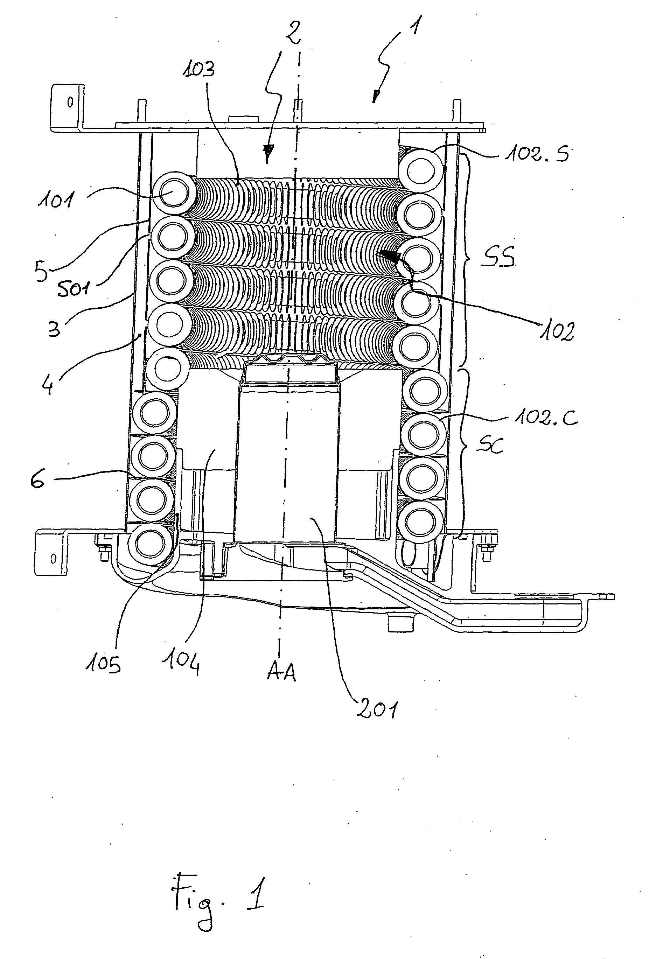

Figure 1 shows a heat exchanger 1 for condensation heat generators comprising a tube 101, finned with fins 103, wound in a spiral to form a suitable number of coils 102 and defining a combustion chamber 2 into which the combustion fumes are introduced, said heat exchanger 1 being encased in a cylindrical shell 3.

The heat exchanger 1, as in prior art, is divided into two parts: a sensitive exchanger SS, exposed to the flames of the burner 201, and a cold exchanger SC, which, on the contrary, is hidden from said flames. Therefore, according to this solution, said cold exchanger SC acts as a condensing exchanger SC, and in fact it comprises a suitable number of coils 102.C destined for heat exchange between the combustion fumes and the water return flow in order to cool said fumes to a temperature lower than the dew point, or in other words, until the condensation of a part of the aqueous vapour contained in the fumes is achieved. According to a preferred but non-limiting embodiment, said coils 102.C are set at a tangent externally to said cylindrical shell 3 and internally to the surface of a refractory partitioning baffle 104 and/or a wall 105.

Contrarily, said sensitive exchanger SS foresees a suitable number of coils 102.S having a diameter which is smaller than the diameter of the coils 102.C of the condenser exchanger SC, and in this manner, a gap 4 is formed between the external surface of said coils 102.S and the surface of said cylindrical shell 3, having a sufficiently large passage section for the collection and circulation of the fumes according to the usual speed which occurs in internal pipes of a fuel supplied heat generator.

Therefore, said cylindrical shell 3 has a constant diameter, in spite of the presence of the gap 4 which has been obtained however, as stated previously, by sacrificing the lesser diameter of the coils 102.S in relation to those of the coils 102.C.

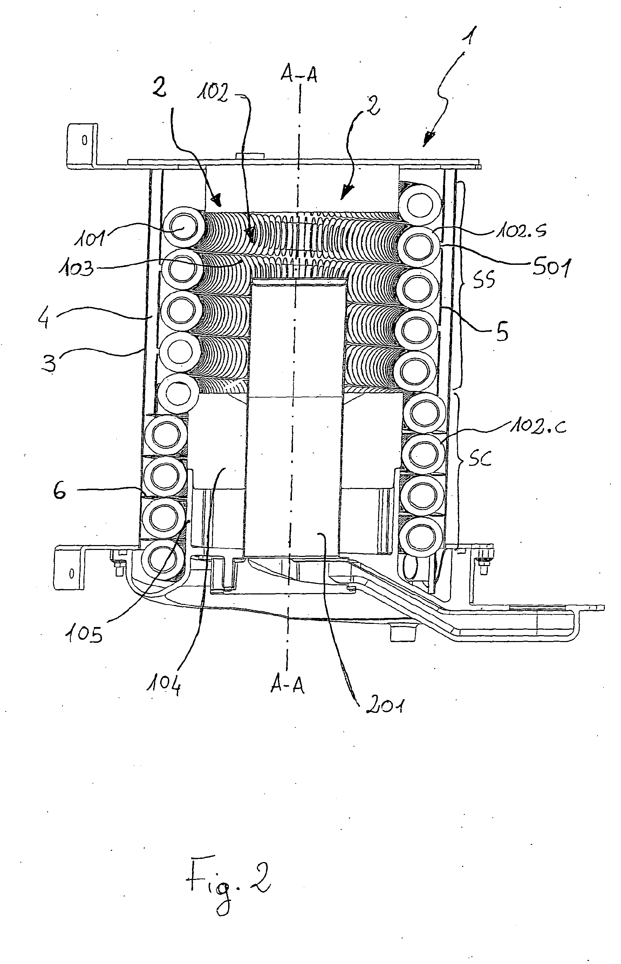

According to the variant shown in figures 1 and 2, said gap 4 forms a plenum 4, located downstream of the coils 102.S of the sensitive exchanger SS, which is able to receive the combustion fumes from the combustion chamber 2 that have crossed the coils 102.S in a radial manner.

Said fumes are then discharged, by means of said plenum 4 in the underlying condenser exchanger SC, where the cooling action on the fumes is completed to reach a temperature, which will provoke their condensation.

With reference to figures 1 and 2 and in correspondence with the sensitive exchanger SS, are shown deflector means 5, which are common in prior art, conceived to force the combustion fumes to lap the largest possible surface of the coils 102.S in a radial manner in order to increase and improve the efficiency of the heat exchange between the fumes and the water.

Said deflector means 5 are located in proximity to and/or set at a tangent to said coils 102.S.

Said deflector means 5 can consist of jackets 5 as shown in figures 1 and 2, equipped with slots 501 which assume a substantially spiral configuration to conform with the step of the helicoidal coils 102.S of the sensitive exchanger SS and positioned in the tangential zone between said coils 102.S and said jacket 5, or alternatively, can consist of equivalent deflector means 5 as described further below.

In a similar manner, with reference to figures from 1 to 4, other deflector means 6 are located in the condenser exchanger SC in order to force the fumes to lap the complete surface of the fins 103 of said coils 102.C of the condenser exchanger SC.

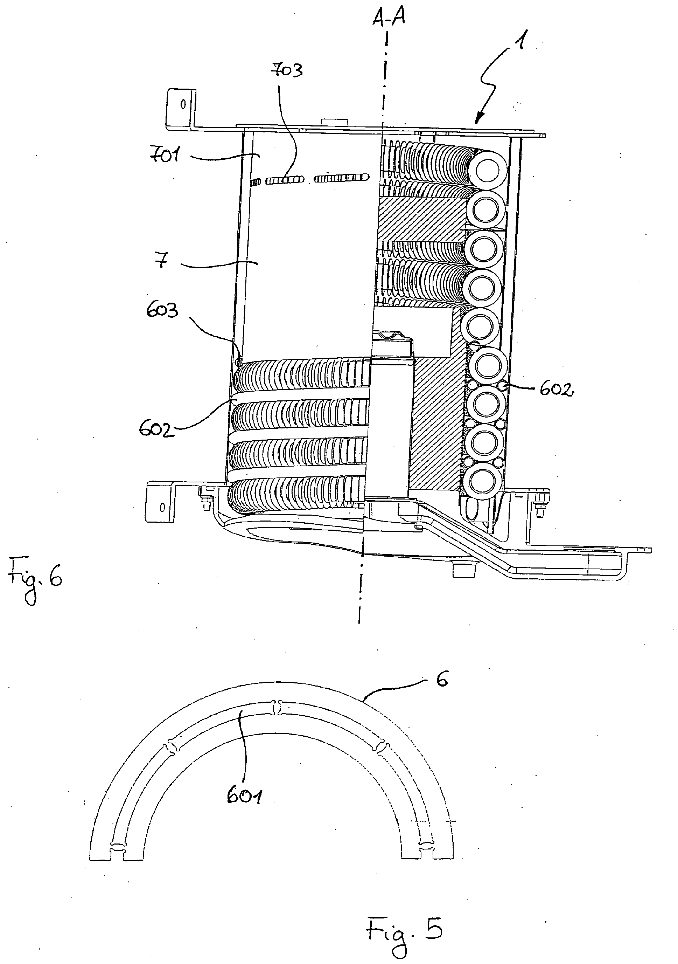

Said deflector means act as dividers 6, having a circular arc shape, and arranged in sequence after one another between one coil 102.C and the adjacent. Said dividers 6 are positioned in a manner to prevent the passage of the fumes from one coil 102.C to the next, except by passing through the slots 601 (see fig. 5) located along the zone of contact with the fins 103. In the examples shown in the appended figures, said dividers 6 are positioned in a manner such that their internal edge is in contact with the refractory partitioning baffle 104 or with the wall 105, and such that their external edge is in contact with the cylindrical shell 3. In an exemplificative and non-limiting example, a condensation type heat generator able to generate power equal to 24kW, with a condensation efficiency of approximately 107%, (in reference to the Inferior calorific power) and with a water return flow temperature of approximately 30°C, can be foreseen with an external diameter of 198 mm for the coils 102.S of the sensitive exchanger SS, and an external diameter of 214 mm for the coils 102.C of the condenser exchanger SC, thus providing a percentage reduction in said diameter of the coils 102.S of approximately 7-8%, and a passage section in the gap 4 of approximately 50 cm².

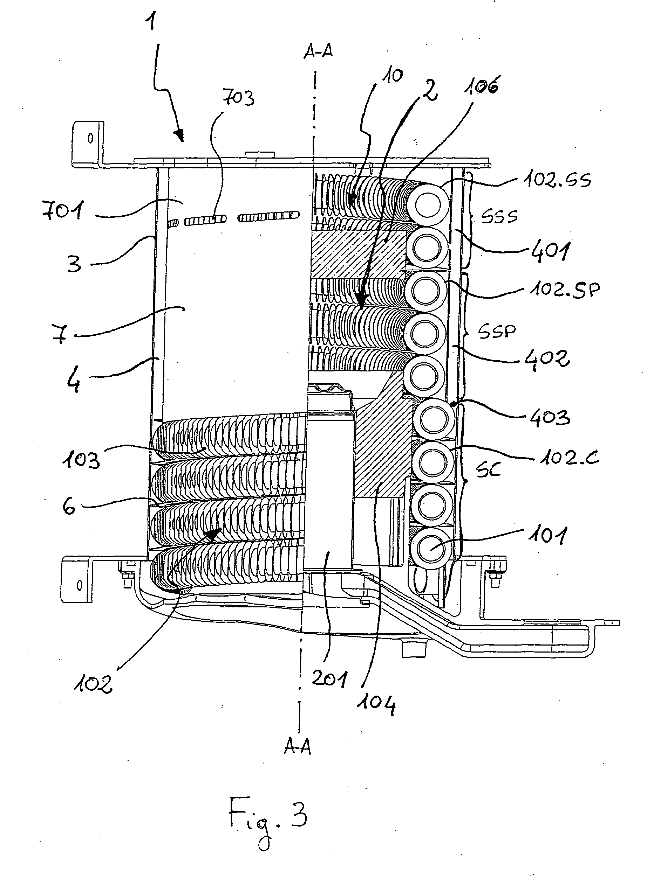

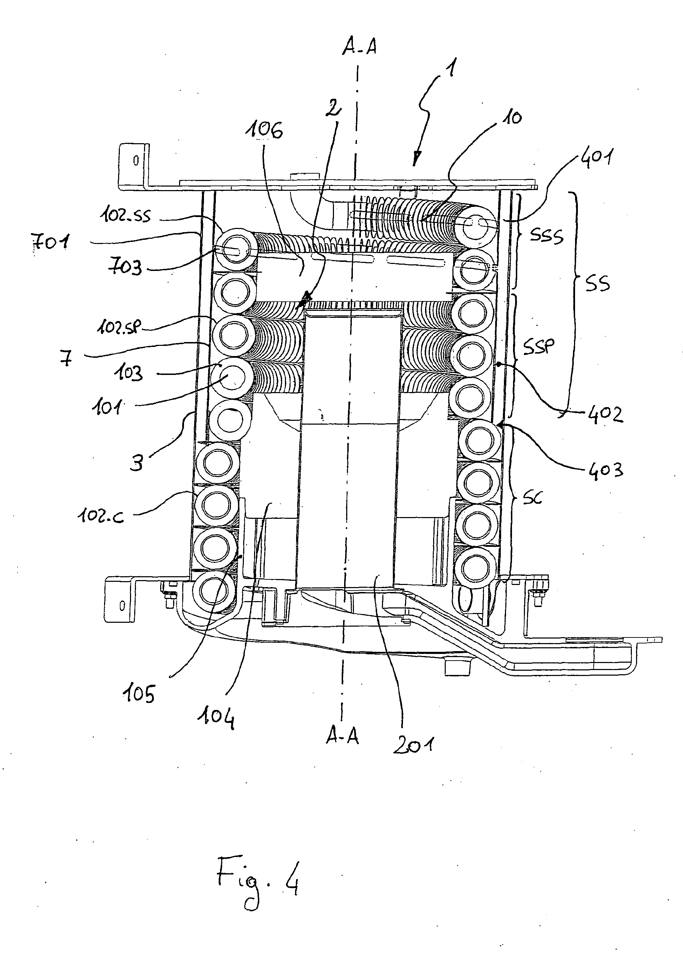

In the variant illustrated in figures 3 and 4, relative to a heat generator associated with a thermoelectric generator, the sensitive exchanger SS is divided into two portions, in other words, a principle sensitive exchanger SSP and a secondary sensitive exchanger SSS.

Said secondary sensitive exchanger SSS defines a chamber 10 into which the combustion fumes from an external source are introduced through a pipe not shown in the figures. Said chamber 10 is separated from the combustion chamber 2 by a refractory partitioning baffle 106 that prevents any penetration by said fumes from an external source.

The coils 102.SS of the secondary sensitive exchanger SSS and the coils 102.SP of the principle sensitive exchanger SSP have a reduced diameter in relation to the coils 102.C of the condenser exchanger SC.

Said coils 102.SP of the principle sensitive exchanger SSP are encased inside an external cylindrical jacket 7, which is tangent to said coils.

The aforesaid external cylindrical jacket 7, together with the refractory positioning baffle 106, prevents the fumes from the external source from mixing with the fumes that circulate in the principle sensitive exchanger SSP.

Furthermore, deflector means 701 are positioned in proximity to and/or at a tangent to said coils 102.SS of the secondary sensitive exchanger SSS.

Said deflector means 701 can be conceived as an extension 701 of said external cylindrical jacket 7, said extension 701 being equipped with slots 703 that assume a substantially spiral configuration in accordance with the step of the said coils 102.SS and produced in the tangential zone between said coils 102.SS and said extension 701 of said external cylindrical jacket 7, or alternatively, can consist of equivalent deflector means 701 as described further below.

In this manner, in correspondence to the coils 102.SS of the secondary sensitive exchanger SSS, the gap 4 forms a plenum 401 conceived to receive the fumes from the external source after they have passed through the secondary sensitive exchanger SSS.

The gap 4 then forms, in correspondence to the coils 102.SP of the principle sensitive exchanger SSP, a pipe 402 that conveys the fumes through to the condenser exchanger SC bypassing said coils 102.SP. The internal wall of said pipe 402 coincide with the jacket 7 and forms also a partitioning baffle 7 that separates the fumes of the external source from the fumes that circulate in the principle sensitive exchanger SSP.

The external cylindrical jacket 7 reduces the exchange surface for the water and fumes in each coil 102.SP of the principle sensitive exchanger SSP, since the fumes are not forced to lap the whole surface of the coils 102.SP before their discharge towards the condenser exchanger SC. In fact, the fumes from the combustion chamber 2 can, at least partially, pass directly into the condenser exchanger SC since they are not forced to entirely cross the same coils 102.SP, whereof part of the fumes lap their internal surface only. Therefore it is beneficial to force the fumes to lap at least part of the coils 102.SP in a direction parallel to the central axis A-A of the heat exchanger 1 as occurs in the condenser exchanger SC. This is obtained by extending the refractory partitioning baffle 104 towards the interior of the combustion chamber 2 for a distance that is greater than that present in the first variant of the invention, where the other parameters such as heat generator dimension and power are maintained equal to the former parameters.

According to the statement above, therefore, the mixing of the fumes of said secondary sensitive exchanger SSS with the fumes of said principle sensitive exchanger SSP occurs in a zone 403 wherein said fumes have both separately substantially reached the same temperature, said zone 403 being located substantially in proximity to the first coil 102.C of the condenser exchanger SC.

Naturally those skilled in the art will be able to apply numerous variants to the exchanger 1 object of the present invention, while remaining within the innovative ambit of the inventive idea, and in the same manner in the practical actuation of the invention, all components described above can be replaced with other technically equivalent elements.

In fact, with reference to figures 2 and 4, it is perfectly feasible to replace the head burner 2 with a cylindrical burner in a manner to optimise the flame distribution in relation to the cylindrical geometry of the heat exchanger 1. In fact the head burner 2 has a flame distribution equal to approximately 70% at the head and approximately only 30% at the sides; for this reason a head burner of this type could cause excessive overheating of the top part of the exchanger 1. On the other hand, a cylindrical burner does not radiate in an upward direction and therefore this problem is reduced.

With reference to figure 6, the deflector means 6 located between coil 102.C and the adjacent coil of the condenser exchanger SC, could be composed of turbolator tubes 602 having a circular section, or a similar profile, closed at the end 603 and having a coil configuration.

Said turbolator tubes 602 are fixed to the coils 102.C of the condenser exchanger SC both internally and externally, using conventional means.

Therefore, said turbolator tubes 602 close the empty spaces between one coil 102.C and the other on the exchanger SC recreating the same effects and the same advantage as the dividers 6.

According to a preferred but non-limiting embodiment, said turbolator tubes 602 are made of silicon rubber, but any equivalent material can be used.

As stated previously, equivalent deflector means 5, 701, can be composed of V-shaped deflectors positioned between one coil and another as described in patent FR 2 479 428; furthermore, the same fins 103 of the tube 101 can act as fume deflectors if suitably bent and compressed to be formed by means of a mechanical bending process as described in patent CA 2496656.

Furthermore, said refractory partitioning baffles 104 and 106, which are particularly heavy, can also be replaced with dividers and/or thermally insulating membranes that are resistant to high temperatures but considerably lighter in weight.

As stated previously, the present invention has been described above in all its various alternative forms and solutions with reference to a condensation type heat generator wherein the cold exchanger SC of the heat exchanger 1 is a condenser exchanger SC.

Naturally, the aspects described above are just as valid for high performance heat generators wherein the combustion fumes exit from the cold exchanger SC, after having lapped the coils 102.C, at such a temperature that does not provoke any condensation of the aqueous vapour contained therein.

Furthermore, the present invention has been described above in all its various alternative forms and solutions with reference to a high performance or a condensation heat generator where the burner 201 is inserted inside the heat exchanger 1 at the base of the same exchanger 1.

However it is equally possible to provide a heat generator wherein said burner 201 is positioned inside the heat exchanger 1 at the top of the same exchanger 1.

Finally, as stated previously, the heat exchanger 1 object of the invention has been described with reference to a high performance or a condensation heat generator, associated with an external thermoelectric generator. However it is equally possible to provide the possibility wherein said heat exchanger 1 could be applied to other sources and/or devices, such as an absorption heat pump or some similar system.

## Claims

1. Heat exchanger (1) for heat generators and for high performance or condensation heat generators in particular, comprising a tube (101) finned with fins (103) wound in a spiral to form a suitable number of coils (102) and defining a combustion chamber (2) into which the combustion fumes are introduced, said exchanger (1) being:
- surrounded by a cylindrical shell (3)
- divided into:
- a first portion (SS), named sensitive exchanger (SS), equipped with first coils (102.S) wherein the combustion fume flow, passing through said first coils (102.S), occurs in a radial direction, that is, orthogonal in relation to the central axis (A-A) of said exchanger (1) and wherein said fumes are cooled to give sensitive heat only;
- a second portion (SC), named cold exchanger (SC), equipped with second coils (102.C) wherein the combustion fume flow, passing through said second coils (102.C), occurs in a direction substantially parallel to said central axis (A-A);
- and where a gap (4) is formed between the external surface of said first coils (102.S) and the internal surface of said shell (3) wherein the fumes are able to circulate at the usual speed obtained in pipes inside fuel-supplied heat generators;
**characterised in that**
said sensitive exchanger (SS) has said first coils (102.S) with a reduced diameter size in relation to that of the coils (102.C) of said cold exchanger (SC).

2. Heat exchanger (1) according to claim 1
**characterised in that**
said second coils (102.C) of said cold exchanger (SC) are the condenser exchanger (SC) of said heat exchanger (1).

3. Heat exchanger (1) according to any of the previous claims
**characterised in that**
said condenser exchanger (SC) has said second coils (102.C) positioned externally at a tangent to said cylindrical shell (3) and internally at a tangent to the surface of a refractory partitioning baffle (104) and/or of a wall (105).

4. Heat exchanger (1) according to any of the previous claims
**characterised in that**
said reduction of the diameter of said first coils (102.S) in relation to the coils (102.C) of said condenser exchanger (SC) contributes to forming said gap (4).

5. Heat exchanger (1) according to the previous claims
**characterised in that**
said gap (4) is a plenum (4) located downstream of the coils (102.S) of the sensitive exchanger (SS) conceived to receive the combustion fumes from said sensitive exchanger (SS) directing them towards the condenser exchanger (SC).

6. Heat exchanger (1) according to any of the previous claims
**characterised in that**
said deflector means (5) are conceived to force the combustion fumes to lap the largest possible surface of said first coils (102.S) of the sensitive exchanger (SS).

7. Heat exchanger (1) for condensation heat exchangers according to the previous claim
**characterised in that**
said deflector means (5) may be jackets (5) positioned at a tangent and external to said first coils (102.S) of said sensitive exchanger (SS), said jacket (5) being equipped with slots (501) that assume a substantially spiral configuration to conform with the step of said first coils (102.S) and realised in correspondence to the zone tangential to first coils (102.S) and said jacket (5).

8. Heat exchanger (1) according to claim 6
**characterised in that**
said deflector means (5) may be V-shaped deflectors, positioned between one coil and the next.

9. Heat exchanger (1) according to claim 6
**characterised in that**
said deflector means (5) are the same fins (103) of the tube (101) appropriately bent and/or compressed by means of a mechanical bending process.

10. Heat exchanger (1) according to claims from 1 to 4
**characterised in that**
- said sensitive exchanger (SS) is divided to form a principle sensitive exchanger (SSP) and a secondary sensitive exchanger (SSS);
- said secondary sensitive exchanger (SSS) defines chamber (10) into which the combustion fumes from an external source are introduced;
- said chamber (10) is separated from the combustion chamber (2) by a refractory partitioning baffle (106) that prevents the penetration of said fumes from an external source.

11. Heat exchanger (1) according to the previous claim
**characterised in that**
the coils (102.SP) of the principle sensitive exchanger (SSP) are surrounded from an external cylindrical jacket (7) positioned at a tangent thereon.

12. Heat exchanger (1) according to claim 10
**characterised in that**
said deflector means (701) are positioned in proximity to and/or at a tangent to the coils (102.SS) of the secondary sensitive exchanger (SSS).

13. Heat exchanger (1) according to the previous claim
**characterised in that**
said deflector means (701) are an extension (701) of said external cylindrical jacket (7), said extension (701) being equipped with slots (703) that assume a substantially spiral configuration to conform with the step of the coils (102.SS) of the secondary sensitive exchanger (SSS), thus forcing the fumes from the external source to lap the largest possible surface of the coils (102.SS) in a radial manner, and that are positioned in correspondence to the tangential zone between said coils (102.SS) of said secondary sensitive exchanger (SSS) and said extension (701) of said external cylindrical jacket (7).

14. Heat exchanger (1) according to claim 12
**characterised in that**
said deflector means (701) may be composed of means according to prior art such as V-shaped deflectors, positioned between one coil and the next, or the same fins (103) of said coils (102.SS) of the secondary sensitive exchanger (SSS) appropriately bent and/or compressed by means of a mechanical bending process.

15. Heat exchanger (1) according to claim 11
**characterised in that**
said external cylindrical jacket (7) prevents the fumes from the external source from mixing with the fumes that circulate in the principle sensitive exchanger (SSP).

16. Heat exchanger (1) according to any claim from 10 onwards
**characterised in that**
said gap (4) forms a plenum (401) in correspondence to said coils (102.SS) of said secondary sensitive exchanger (SSS), conceived to receive the fumes from the external source after they have crossed said secondary sensitive exchanger (SSS).

17. Heat exchanger (1) according to any claim from 10 onwards
**characterised in that**
said gap (4) forms a pipe (402) in correspondence to said coils (102.SP) of said principle sensitive exchanger (SSP), that conveys said fumes from the external source as far as the condenser exchanger (SC), bypassing said coils (102.SP), the internal wall of said pipe (402) coinciding with said jacket (7), and realizing a partitioning baffle (7) to separate the fumes from the external source from the fumes that circulate in the principle sensitive exchanger (SSP).

18. Heat exchanger (1) according to any claim from 10 onwards
**characterised in that**
a part of the coils (102.SP) of the principle sensitive exchanger (SSP) is positioned externally at a tangent in relation to said external cylindrical jacket (7) and internally at a tangent in relation to the surface of the refractory partitioning baffle (104), said refractory partitioning baffle (104) extending towards the interior of the combustion chamber (2) in such a manner that said part of the coils (102.SP) is crossed by fumes from the combustion chamber (2) in a direction parallel to the central axis (A-A) of said exchanger (1), as occurs in the same manner in the condenser exchanger (SC).

19. Heat exchanger (1) according to any claim from 10 onwards
**characterised in that**
the mixing of the fumes of said secondary sensitive exchanger (SSS) and the fumes of said principle sensitive exchanger (SSP) occurs in a zone (403) wherein said fumes have separately reached substantially the same temperature.

20. Heat exchanger (1) according to the previous claim
**characterised in that**
said zone (403) is substantially in proximity to the first coil (102.C) of the condenser exchanger (SC).

21. Heat exchanger (1) according to any of the previous claims
**characterised in that**
deflector means (6) are positioned between one coil (102.C) and the adjacent of said condenser exchanger (SC) conceived to force the fumes to lap the complete surface of the fins (103) of said coils (102.C) of said condenser exchanger (SC).

22. Heat exchanger (1) according to the previous claim
**characterised in that**
said deflector means (6) are dividers (6), having a circular arc shape, said dividers (6) being equipped with slots (601) along their zone of contact with said fins (103) and making contact along their internal edge with the refractory partitioning baffle (104) or the wall (105) and along their external edge with the cylindrical shell (3).

23. Heat exchanger (1) according to any of the previous claims
**characterised in that**
turbolator tubes (602), are positioned between one coil and another (102.C) of the condenser exchanger (SC), said turbolator tubes (602) being closed at the ends (603), forming a coil and fixed using conventional means, both internally and externally to said coils (102.C) of said condenser exchanger (SC), in order to perform the same function as the dividers (6) described in claim 21.

24. Heat exchanger (1) according to the previous claim
**characterised in that**
said refractory partitioning baffles (104, 106) may be replaced by dividers and/or thermally insulating membranes resistant to high temperatures.

25. A high performance or condensation heat generator using a heat exchanger (1) according to one or more of the previous claims.
